# EUROPEAN PATENT SPECIFICATION

(11) **EP 2 783 913 B1**
(45) Date of publication and mention of the grant of the patent: **15.08.2018**
(21) Application number: 14161411.5
(22) Date of filing: 25.03.2014
(51) Int. Cl.: B60P 3/05, B65G 49/06, B65G 67/02, B65D 88/12, B65D 90/00

(54) **Loading wagon, method for securing or unsecuring thereof and transporting means**
Ladewagen, Verfahren zum Sichern oder Entsichern davon und Transportmittel
Chargement en wagon, procédé de sécurisation ou désécurisation de celui-ci et le transport de moyens

(30) Priority: 26.03.2013 BE 201300208
(43) Date of publication of application: 01.10.2014
(73) Proprietor: conTeyor International nv, 9820 Merelbeke (BE)
(72) Inventor: Vermeulen, Bart, 9820 Merelbeke (BE); Van Bree, Jos, 9820 Merelbeke (BE)
(74) Representative: Brantsandpatents bvba

(56) References cited:
- DE-A1- 19 717 352
- DE-U1- 7 800 399
- FR-A1- 2 667 849
- NL-A- 8 403 373
- US-A- 4 884 935

## Description

### TECHNICAL FIELD

A first aspect of the present invention relates to a loading wagon for storing one or more goods in a transporting means. A second and a third aspect of the invention relate to a method for securing loading wagons in a transporting means and a method for unsecuring loading wagons in a transporting means. A fourth aspect of the invention relates to a transporting means provided with loading wagons.

### BACKGROUND

It is known for goods to be transported from a production environment to an assembly environment, with said goods being suspended in a transporting means by means of loading wagons. One or more goods can be loaded into/onto these loading wagons in the production environment and then unloaded from the transporting means and from the loading wagons after they have been transported to the assembly environment.

Belgian patent application BE2012/0005, which has been filed but not yet published, relates to a method and a device from the prior art of such a logistical system for transporting goods on loading wagons.

NL 8 403 373 discloses a transport container suitable for transporting glass plates. The glass plates are loaded on loading wagons, after which said loading wagons are inserted transversely into the container via its open side. However, the invention makes an inefficient use of the container volume, as the container only offers a limited number of distinct entries, each of said entries being suitable for hosting a single loading wagon. The number of loaded loading wagons that can be inserted thus depends on the loading wagons themselves and not so much on the shape and size of the goods they carry. At the entries for the loading wagons, the container is provided with a set of rails near its base, along which a loading wagon is movable in the transverse direction by means of wheels. Optionally, the container is additionally provided at said entries with means for further securing loading wagons.

FR 2 667 849 describes a panel transport container which is internally provided with one longitudinal distribution rail, onto which multiple sets of transverse storage rails are branched. Panels can be accommodated within the interior of the container, whereby each set of transverse storage rails can host a group of (transversely) stocked panels. Optionally, damping bags are incorporated in between the stored panels, whereby the lower sides of said bags are connected by means of cords to hooks at the container base. Such damping bags reduce the risk of panel scratching during transport.

US 4 884 935 relates to collapsible transporter modules in the form of collapsible racks, for transporting goods in a transportation vehicle. The transportation vehicle thereby has an overhead rail near its roof. Each transporter module has a rigid upper frame which can be mounted slidably along said overhead rail, a plurality of collapsible support members, and a plurality of shelf members that are supported by said support members. The transporter modules freely suspend from the overhead rail, such that there is a significant risk for damaging of goods during transport. Therefore, the transportation vehicle is preferably filled from front to back, as to limit the movement of the transporter modules.

One of the problems with the known loading wagons is that the space in the transporting means is not used in an optimum manner. Problems also frequently arise when the goods are nested in the transporting means, such as the goods colliding with one another or hitting the walls of the transporting means. The friction which is associated with this, or forcing goods on loading wagons into the transporting means, can lead to scratches or irreparable damage to the goods and the transporting means. In the case of problems, it is necessary to intervene manually, which on the one hand is not evident, for example, deep inside the transporting means. On the other hand, this causes a considerable loss of time. There is also the problem that the suspended goods move and/or swing during transport, as a result of which they may collide with or rub against one another or the walls of the transporting means and/or become damaged.

It is an object of the present invention to improve the design of a loading wagon, which offers a solution to at least one of the above-mentioned drawbacks of suspending and transporting goods, as described in Claim 1.

### SUMMARY OF THE INVENTION

The present invention relates in particular to a loading wagon suitable for storing one or more goods, which loading wagon is provided with suspension means for shiftable bearing on a suspension system on the roof or on the side walls of a transporting means, wherein the loading wagon is further provided with at least one securing element which is suitable for securing the loading wagon to a side wall of the transporting means already during transport in a transporting means, as described in Claim 1.

A second aspect of the invention relates to a method for securing a series of loading wagons, as described in Claim 11. The invention also relates to a method for unsecuring a series of loading wagons, as described in Claim 14.

Further preferred embodiments are described in the subclaims.

By securing loading wagons to one or more walls of the transporting means, the transport of goods becomes safer and less susceptible to damage. As a result, the swinging of goods or collision of goods with one another or against the walls, or against other loading wagons and suspension systems, is drastically reduced.

### DESCRIPTION OF THE FlGURES

The following figures show preferred embodiments of the invention.
Figure 1 shows a bird's-eye view of an unloaded transporting means in an unsecured position.
Figures 2 and 3 show a rear view of a transporting means in an unsecured position.
Figure 4 shows a rear view of a transporting means in an unsecured position, loaded with goods.
Figure 5 shows a bird's-eye view of a transporting means in a secured position, loaded with goods.
Figure 6 shows a bird's-eye view of a transporting means in a secured position, loaded with boxes and crates on pallets.
Figure 7 diagrammatically shows a cross-sectional view perpendicular to the longitudinal axis of the transporting means.
Figure 8 shows a loading wagon with a possible good.
Figure 9 diagrammatically shows a cross-sectional view along the longitudinal axis of a transporting means.
Figure 10 shows a universal loading wagon with a possible good.

### DETAILED DESCRIPTION

The invention is described below by means of non-limiting examples which illustrate the invention and which are not intended to limit the scope of the invention or should not be interpreted in this way.

A first aspect of the present invention relates to a loading wagon suitable for storing one or more goods, which loading wagon is provided with suspension means for shiftable bearing on a suspension system on the roof or on the side walls of a transporting means, wherein the loading wagon is further provided with at least one securing element which is suitable for securing the loading wagon to a side wall of the transporting means already during transport in a transporting means.

In the present invention, the term "transporting means" is understood to mean a truck, curtainsider trailer, tilt trailer, semitrailer, trailer, shipping container, van, railway wagon, aircraft or boat.

By securing loading wagons to one or more walls of the transporting means, the transport of goods becomes safer. As a result, there is a drastic reduction in the swinging or collision of goods and loading wagons on a suspension system with one another or against walls.
In a preferred embodiment, the securing element extends at the side of the loading wagon. This offers the advantage of securing the loading wagon to a side wall of the transporting means, which leads to better stability of the loading wagon.

In a preferred embodiment, the suspension means extend at the top of the loading wagon. This permits the loading wagons to be suspended from a suspension system which is fastened to the roof of the transporting means, which has a space-saving effect.

In a preferred embodiment, the suspension means extend above the centre of gravity of the loaded loading wagon. This enhances the stability of the loading wagon.

In a preferred embodiment, the suspension means are suitable for suspending the loading wagon from one or more parallel rails. These rails provide a simple, convenient, user-friendly and economical way to shiftably bear loading wagons.

In the present invention, the term 'rail' is understood to mean a tube, rod or profile from which loading wagons can be suspended and whereby the loading wagon is able to be displaced along the longitudinal direction of the rail.

In a preferred embodiment, rotatable wheels or rollers are provided in the rails. These wheels or rollers enhance the movement or guidance of loading wagons along the rail.

In a preferred embodiment, the suspension means are provided with a fixing means. Such a fixing means prevents any swinging or shifting of the loading wagon on the suspension system during transport.

In the present invention, the term 'fixing means' is understood to mean a means which is suitable for fixing a suspension means and/or for impeding the movement of the suspension means with respect to the rail on which the suspension means is provided.

In a preferred embodiment, the loading wagon is suitable for storing one good. This offers the advantage that the loading wagon may be suitable for stacking goods, even if they have, for example, an irregular shape in an advantageous and well-ordered manner in the space of the transporting means.

In a preferred embodiment, the loading wagon is provided with one, two or several suspension points. Several suspension points provides extra stability to the loading wagon. The swinging of the loading wagons is limited to a greater degree.

In a preferred embodiment, the loading wagon is provided with one or more pouches. In the present invention, the term "pouches" is understood to mean, inter alia, bags, boxes, compartment systems and multibags, preferably of a flexible material such as textile or plastic. This offers a more efficient, smoother and space-saving transport of goods. This also provides improved protection of the goods from being damaged during transport.

In a preferred embodiment, the loading wagon can be folded up. This has a space-saving effect and, as a result, the transporting means can also be used for goods which cannot be suspended, such as in the case of transport using pallets, for example.

In a preferred embodiment, the loading wagon is lockable in the unfolded and/or folded position. A lockable loading wagon ensures a safer and sturdier suspension of goods if it is locked in the unfolded and/or folded position. Locking is understood to mean that the possibility of folding and/or folding up the loading wagon is obstructed. This becomes possible again by unlocking the loading wagon.

In a preferred embodiment, the loading wagon is provided with one or more elements which are suitable for limiting the movement or swinging of the goods which are being carried. This protects the goods more effectively from being scratched or damaged.

In a preferred embodiment, the loading wagon is provided with one or more flexible pouches, wherein said pouches are made from a flexible web material.

Preferably, it is a multilayer web material which comprises a nonwoven. More preferably, the several layers of the web material are coupled to one another in accordance with a coupling grid, which coupling grid comprises couplings and which coupling grid subdivides the web material into several pockets. These pockets act as cushions, as a result of which the web material is softer, voluminous and shock-absorbing, so that goods which are loaded in can be afforded better protection.

In a preferred embodiment, the loading wagons concern universal loading wagons.

In the present invention, the term "universal loading wagon" is understood to mean a loading wagon which is suitable for storing several goods of different dimensions and/or which loading wagons are suitable for storing goods which differ from one another.

A second aspect of the present invention relates to a method for securing a series of loading wagons, each of which is suitable for storing one or more goods, said method comprising the following steps:
- loading goods into loading wagons;
- suspending the loading wagons from a suspension system in a transporting means;
- combining the loading wagons in the transporting means;
- jointly securing the loading wagons in the transporting means.

The advantage of said method is that goods can be loaded into the transporting means in a smoother and safer manner and with fewer problems among them.

In a preferred embodiment, the loading wagons are secured by moving one or two side walls of the transporting means, and the securing is effected at one or two side walls of the transporting means.

By a simple and straightforward movement of the side walls towards the transporting means, the described volume of the transporting means becomes smaller in order to be able to secure the goods after loading. Before unloading the transporting means, the described volume of the transporting means can be made larger by moving the side walls away from the transporting means. This provides a better, simpler and safer way of securing suspended goods.

In a preferred embodiment, one or two side walls are moved in a hinged and/or shifting manner.

A third aspect of the present invention relates to a method for unsecuring a series of loading wagons, each of which is suitable for storing one or more goods, which loading wagons are suspended from a suspension system in a transporting means, said method comprising the following steps:
- jointly unsecuring the loading wagons in the transporting means;
- disassembling the loading wagons in the transporting means;
- removing the loading wagons from the suspension system in the transporting means;
- unloading goods from the loading wagons;

The advantage of said method is that goods can be unloaded from the transporting means in a smoother and safer manner and with fewer problems among them.

In a preferred embodiment, said process of securing and/or unsecuring a series of loading wagons is subject to gravity. By, for example, selecting the angle between a suspension system with rails and the ground to be adjustable, it is possible to displace loading wagons under the influence of gravity. By using this technique when loading loading wagons into or out of the transporting means, this process is smoother and does not require manual intervention, which is more economical and user-friendly.

A fourth aspect of the present invention relates to a transporting means provided with one or more suspension systems from which loading wagons are suspended.

### FIGURES

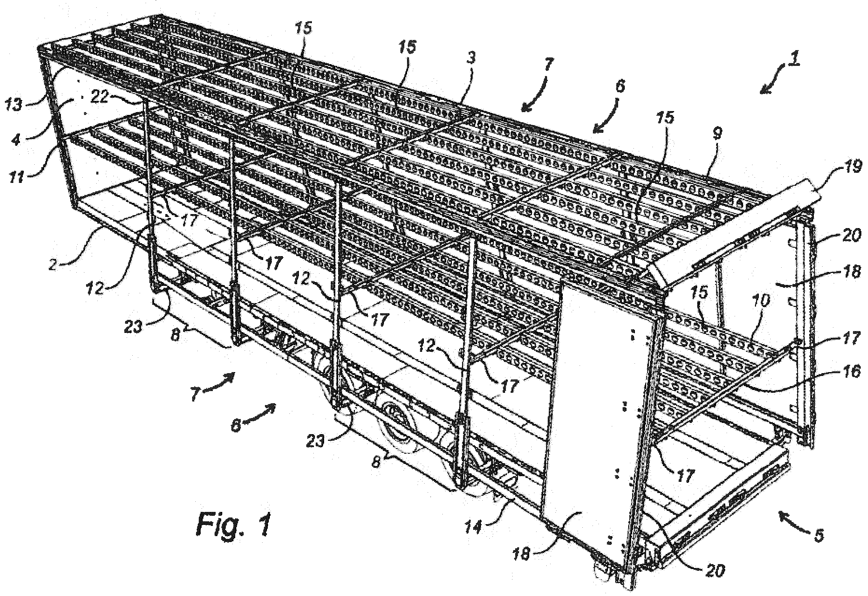

Figure 1 shows a bird's-eye view of the frame of an unloaded transporting means (1) in the unsecured position, according to a preferred embodiment of the present invention. The transporting means (1) is provided with a chassis (2), two side walls (6), a roof (3), a front structure (4) and a rear structure (5).

The side walls (6) comprise a side wall structure (7). The side wall structure (7) comprises side posts (12) which are beared on the roof (3) on the longitudinal bars (13) via hinges (22). These side posts (12) divide the side walls (6) into side wall sections or side wall segments (8). At the bottom, these side posts (12) are connected to one another by means of a side edge profile (14) as well as displaceably beared on the chassis (2) via a profile (23).
A suspension system (9) is provided on the roof (3). This comprises several suspension rails (15). An intermediate suspension system (10) is further provided. This comprises suspension rails (15) and also telescopic rail mounts (16) which are shiftably beared on the side posts (12) of the side wall structures (7) via telescopic tubes (17). The intermediate suspension system is also suspended from the front corner posts (11) of the front structure (4) of the transporting means (1) and from the rear corner posts (20) of the rear structure (5).

On the rear structure (5) of the transporting means (1), two rear doors (18) are hingeably beared on the side wall structures (7). A folding bar (19) is provided on the roof (3). The folding bar (19) makes it possible to allow or to obstruct access to the suspension rails (15) of the suspension system (9).

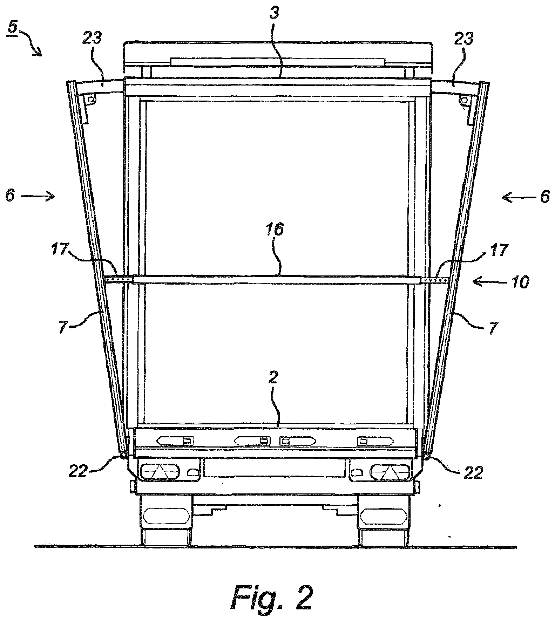

Figure 2 shows a rear view of a transporting means (1) in the unsecured position, according to an alternative preferred embodiment of the invention. An intermediate suspension system (10) is provided which comprises telescopic rail mounts (16) which are shiftably beared on the side posts (12) of the side wall structures (7) via telescopic tubes (17). The side wall structures (7) are beared on the chassis (2) via hinges (22) and are also shiftably beared on the roof (3) of the transporting means (1) via profiles (23).

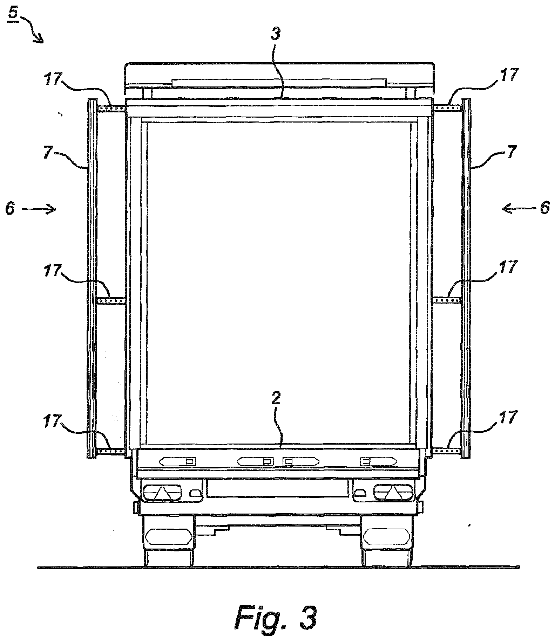

Figure 3 shows a rear view of a transporting means (1) in the unsecured position, according to a further preferred embodiment of the invention. In this case, the side wall structures (7) are shiftably beared on both the chassis (2) and the roof (3) by means of telescopic tubes (17).

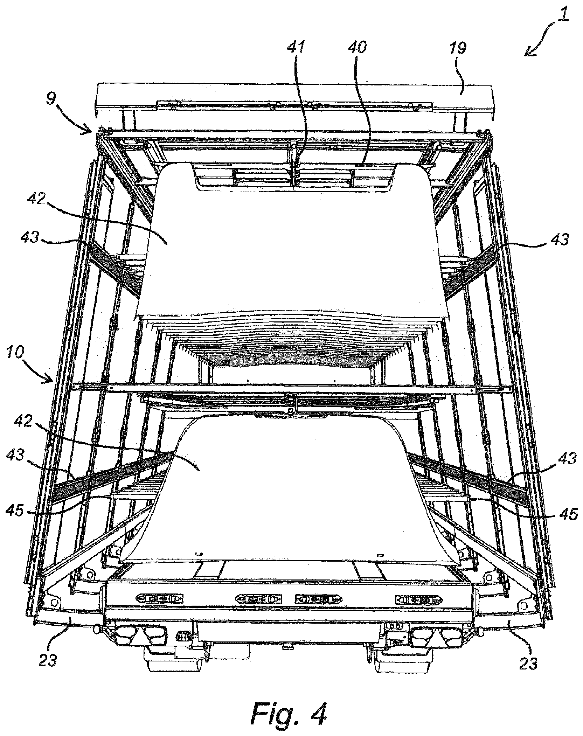

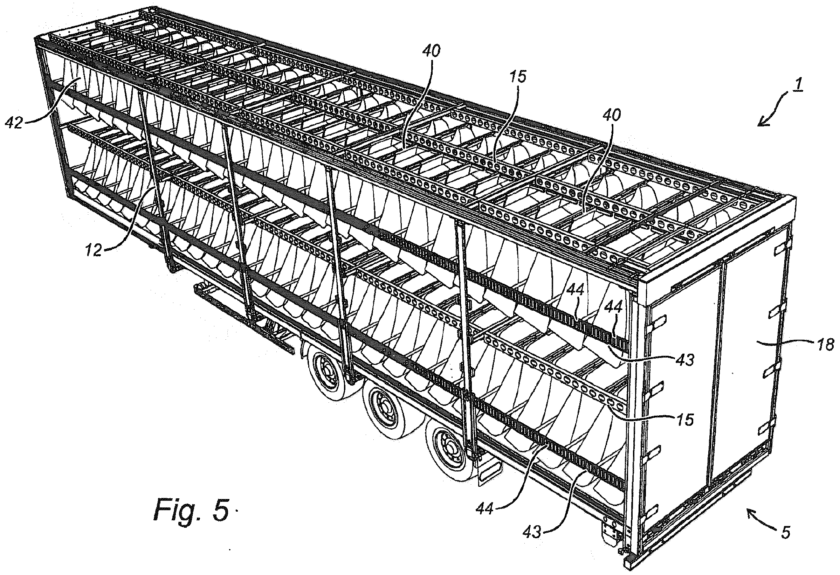

Figure 4 shows a rear view of a transporting means in the unsecured position, loaded with goods, according to a preferred embodiment of the invention. Loading wagons (40) are suspended from both the suspension system (9) and the intermediate suspension system (10) via a suspension means (41). Each loading wagon (40) stores one good (42), for example, a roof spoiler of a truck. Each side of the loading wagons (40) is provided with a securing pin (45), being a securing element (50). This is suitable for securing the loading wagon (40) to the side wall (6) which is provided with a securing rail (43). This securing rail (43) is provided with securing grooves (44) in order to accommodate the securing pins (45) and thus to secure the loading wagons (40) when the side walls (6) are closed. This is illustrated in Figure 5. This is a bird's-eye view of the same transporting means in the secured position. All loading wagons (40) are secured in the transporting means (1).

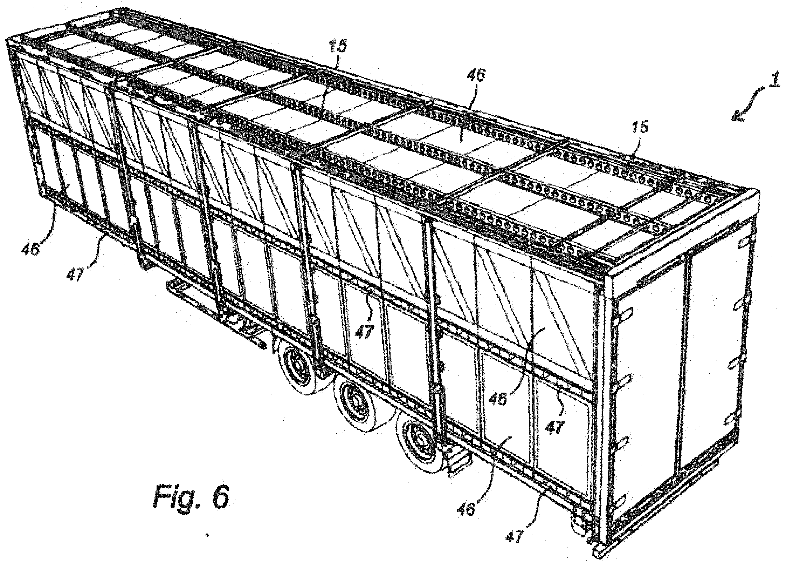

Figure 6 shows a bird's-eye view of the same transporting means in the secured position, loaded with boxes or crates (46) on pallets (47). The intermediate suspension system (10), the securing rails (43) and the loading wagons (40), inter alia, are stored compactly in a compartment in the front structure (4) of the transporting means (1), in order to maximize the space inside the transporting means for goods (42) which cannot be suspended, such as boxes or crates (46).

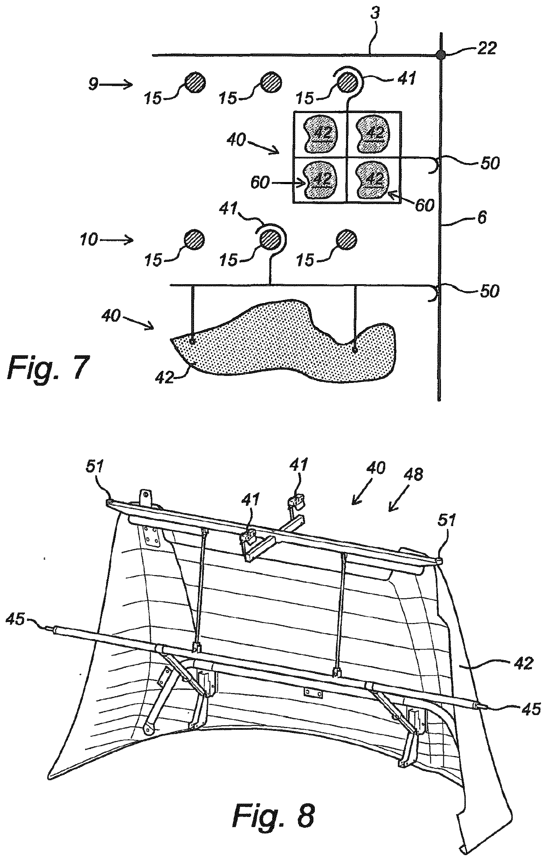

Figure 7 diagrammatically shows a cross-sectional view perpendicular to the longitudinal axis of a transporting means (1) together with suspended loading wagons (40) according to a preferred embodiment of the invention. A loading wagon (40) can store, on the one hand, one single good (42) and, on the other hand, several goods (42) in, for example, pouches (60). A loading wagon (40) is provided with suspension means (41) which are suitable for shiftably bearing the loading wagon (40) on a suspension system (9, 10) of a transporting means (1). These loading wagons (40) are provided with a securing element (50) which is suitable for securing the loading wagons (40) to a side wall (6) of the transporting means.

Figure 8 shows a foldable loading wagon (40) with a stored good (42) in an unfolded position (48). The loading wagon comprises suspension means (41), movement-limiting elements (51) and securing pins (45), being securing means (50).

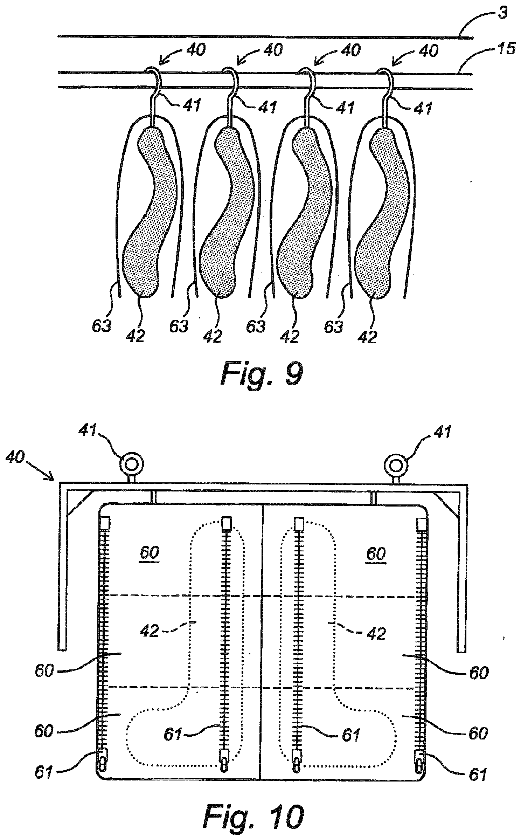

Figure 9 diagrammatically shows a cross-sectional view along the longitudinal axis of a transporting means together with suspended loading wagons (40) according to a preferred embodiment of the invention. The loading wagons (40) store one single good (42). A loading wagon (40) is provided with suspension means (41) which are suitable for shiftably bearing the loading wagon (40) on a rail (15) of the suspension system on the roof (3) of the transporting means. The loading wagons (40) are provided with a protective flap (63) which protects the suspended good from external influences and as a result from nearby suspended goods.

Figure 10 shows a universal loading wagon (40) with a possible good. The loading wagon comprises suspension means (41) and a pouch system. This pouch system comprises two compartments, each of which is subdivided into three flexible sections or pouches (60). It is possible to store goods (42) of different sizes, shapes and dimensions in the loading wagon by providing pouches which are suitable for storing various goods. In the figure, a good is stored in the largest pouch (60) of each compartment. The loading wagon is provided with several zips (61) which provide access to the inside of the pouches. The bottom is preferably open. This prevents dirt and dust from accumulating inside the pouch system.

It is assumed that the present invention is not limited to the embodiments which have been described above and that some modifications or changes can be made to the described examples without reassessing the attached claims.

## Claims

1. Loading wagon (40) suitable for storing one or more goods (42), which loading wagon (40) is provided with suspension means (41) for shiftable bearing on a suspension system (9, 10) on the roof or on the side walls of a transporting means (1), **characterized in that** the loading wagon (40) is further provided with at least one securing element (50), being a securing pin extending at the side of the loading wagon, which is suitable for securing the loading wagon (40) to a side wall of the transporting means (1) already during transport in the transporting means (1).

2. Loading wagon (40) according to one of the preceding Claim 1, **characterized in that** the suspension means (41) extend at the top of the loading wagon (40).

3. Loading wagon (40) according to one of the preceding Claims 1-2, **characterized in that** the suspension means (41) are suitable for suspending the loading wagon (40) from one or more parallel rails (15).

4. Loading wagon (40) according to one of the preceding Claims 1-3, **characterized in that** the suspension means (41) are provided with a fixing means.

5. Loading wagon (40) according to one of the preceding Claims 1-4, **characterized in that** the loading wagon (40) is provided with one or more pouches.

6. Loading wagon (40) according to one of the preceding Claims 1-5, **characterized in that** the loading wagon (40) can be folded up.

7. Loading wagon (40) according to the preceding Claim 6, **characterized in that** the loading wagon (40) is lockable in the unfolded (48) and/or folded position.

8. Loading wagon (40) according to one of the preceding Claims 1-7, **characterized in that** the loading wagon (40) is provided with one or more elements (51) which are suitable for limiting the movement or swinging of the loaded goods (42).

9. Loading wagon (40) according to one of the preceding Claims 1-8, **characterized in that** the loading wagon (40) is provided with one or more flexible pouches (60), wherein said pouches are made from a flexible web material.

10. Method for securing a series of loading wagons (40) according to one of Claims 1-9, each of which is suitable for storing one or more goods (42), **characterized in that** said method comprises the following steps:
- loading goods (42) into loading wagons;
- suspending the loading wagons (40) from a suspension system (9, 10) in a transporting means (1);
- joining together the loading wagons (40) in the transporting means (1);
- jointly securing the loading wagons (40) in the transporting means (1).

11. Method according to the preceding Claim 10, **characterized in that** the loading wagons (40) are secured by moving one or two side walls of the transporting means (1), and **in that** the securing is effected at one or two side walls of the transporting means (1).

12. Method according to the preceding Claim 11, **characterized in that** the one or two side walls are moved in a hinged and/or shifting manner.

13. Method for unsecuring a series of loading wagons according to one of Claims 1-10, each of which is suitable for storing one or more goods (42), which loading wagons (40) are suspended from a suspension system (9, 10) in a transporting means, **characterized in that** said method comprises the following steps:
- jointly unsecuring the loading wagons (40) in the transporting means (1);
- removing the loading wagons (40) from the transporting means (1);
- removing the loading wagons (40) from the suspension system (9, 10) in the transporting means (1);
- unloading goods (42) from the loading wagons (40).

14. Transporting means (1) provided with one or more suspension systems (9, 10) from which loading wagons (40) according to one of the preceding Claims 1-9 are suspended.

## Patentansprüche

1. Ladewagen (40), geeignet zum Verwahren eines oder mehrerer Güter (42), wobei der Ladewagen (40) mit Aufhängungsmitteln (41) für das verschiebbare Lagern an einem Aufhängungssystem (9, 10) an dem Dach oder den Seitenwänden eines Transportmittels (1) versehen ist, **dadurch gekennzeichnet, dass** der Ladewagen (40) ferner mit mindestens einem Sicherungselement (50) versehen ist, das ein Sicherungsstift ist, der sich an der Seite des Ladewagens erstreckt, das dazu geeignet ist, den Ladewagen (40) an einer Seitenwand des Transportmittels (1) bereits während des Transports in dem Transportmittel (1) zu sichern.

2. Ladewagen (40) nach einem des vorhergehenden Anspruchs 1, **dadurch gekennzeichnet, dass** sich die Aufhängungsmittel (41) an der Oberseite des Ladewagens (40) erstrecken.

3. Ladewagen (40) nach einem der vorhergehenden Ansprüche 1-2, **dadurch gekennzeichnet, dass** die Aufhängungsmittel (41) dazu geeignet sind, den Ladewagen (40) von einer oder mehreren parallelen Schienen (15) abzuhängen.

4. Ladewagen (40) nach einem der vorhergehenden Ansprüche 1-3, **dadurch gekennzeichnet, dass** die Aufhängungsmittel (41) mit einem Fixierungsmittel versehen sind.

5. Ladewagen (40) nach einem der vorhergehenden Ansprüche 1-4, **dadurch gekennzeichnet, dass** der Ladewagen (40) mit einer oder mehreren Taschen versehen ist.

6. Ladewagen (40) nach einem der vorhergehenden Ansprüche 1-5, **dadurch gekennzeichnet, dass** der Ladewagen (40) eingeklappt werden kann.

7. Ladewagen (40) nach dem vorhergehenden Anspruch 6, **dadurch gekennzeichnet, dass** der Ladewagen (40) in der ausgeklappten (48) und/oder der eingeklappten Position arretierbar ist.

8. Ladewagen (40) nach einem der vorhergehenden Ansprüche 1-7, **dadurch gekennzeichnet, dass** der Ladewagen (40) mit einem oder mehreren Elementen (51) versehen ist, die dazu geeignet sind, die Bewegung oder Schwingung der geladenen Güter (42) zu beschränken.

9. Ladewagen (40) nach einem der vorhergehenden Ansprüche 1-8, **dadurch gekennzeichnet, dass** der Ladewagen (40) mit einer oder mehreren flexiblen Taschen (60) versehen ist, wobei die Taschen aus einem flexiblen Bahnmaterial bestehen.

10. Verfahren zum Sichern einer Gruppe von Ladewagen (40) nach einem der Ansprüche 1-9, von denen jeder dazu geeignet ist, ein oder mehrere Güter (42) zu verwahren, **dadurch gekennzeichnet, dass** das Verfahren die folgenden Schritte umfasst:
- Laden von Gütern (42) in Ladewagen,
- Abhängen der Ladewagen (40) von einem Aufhängungssystem (9, 10) in einem Transportmittel (1),
- aneinander Verbinden der Ladewagen (40) in dem Transportmittel (1),
- gemeinsames Sichern der Ladewagen (40) in dem Transportmittel (1).

11. Verfahren nach dem vorhergehenden Anspruch 10, **dadurch gekennzeichnet, dass** die Ladewagen (40) durch Bewegen einer oder zweier Seitenwände des Transportmittels (1) gesichert werden, und dadurch, dass das Sichern an einer oder zwei Seitenwänden des Transportmittels (1) bewirkt wird.

12. Verfahren nach dem vorhergehenden Anspruch 11, **dadurch gekennzeichnet, dass** die eine oder zwei Seitenwände in einer gelenkigen und/oder verschiebenden Weise bewegt werden.

13. Verfahren zum Entsichern einer Gruppe von Ladewagen nach einem der vorhergehenden Ansprüche 1-10, von denen jeder dazu geeignet ist, ein oder mehrere Güter (42) zu verwahren, wobei die Ladewagen (40) von einem Aufhängungssystem (9, 10) in einem Transportmittel abgehängt sind, **dadurch gekennzeichnet, dass** das Verfahren die folgenden Schritte umfasst:
- gemeinsames Entsichern der Ladewagen (40) in dem Transportmittel (1),
- Entfernen der Ladewagen (40) aus dem Transportmittel (1),
- Entfernen der Ladewagen (40) von dem Aufhängungssystem (9, 10) in dem Transportmittel (1),
- Entladen der Güter (42) aus den Ladewagen (40).

14. Transportmittel (1), versehen mit einem oder mehreren Aufhängungssystemen (9, 10), von denen Ladewagen (40) nach einem der vorhergehenden Ansprüche 1-9 abgehängt sind.

## Revendications

1. Wagon de chargement (40) approprié pour stocker une ou plusieurs marchandises (42), lequel wagon de chargement (40) est pourvu de moyens de suspension (41) pour une rétention coulissante à un système de suspension (9, 10) sur le toit ou sur les parois latérales d'un moyen de transport (1), **caractérisé en ce que** le wagon de chargement (40) est en outre pourvu d'au moins un élément de sécurité (50), étant une goupille de sécurité s'étendant sur le côté du wagon de chargement, qui est approprié pour assurer le wagon de chargement (40) à une paroi latérale du moyen de transport (1) déjà pendant le transport dans le moyen de transport (1).

2. Wagon de chargement (40) selon l'une quelconque de la revendication 1 **caractérisé en ce que** les moyens de suspension (41) s'étendent en haut du wagon de chargement (40).

3. Wagon de chargement (40) selon l'une quelconque des revendications précédentes 1-2, **caractérisé en ce que** les moyens de suspension (41) sont appropriés pour suspendre le wagon de chargement (40) à un ou plusieurs rails parallèles (15).

4. Wagon de chargement (40) selon l'une quelconque des revendications précédentes 1-3, **caractérisé en ce que** les moyens de suspension (41) sont munis d'un moyen de fixation.

5. Wagon de chargement (40) selon l'une quelconque des revendications précédentes 1-4, **caractérisé en ce que** le wagon de chargement (40) est muni d'une ou de plusieurs poches.

6. Wagon de chargement (40) selon l'une quelconque des revendications précédentes 1-5, **caractérisé en ce que** le wagon de chargement (40) peut être replié.

7. Wagon de chargement (40) selon la revendication précédente 6, **caractérisé en ce que** le wagon de chargement (40) peut être verrouillé dans la position dépliée (48) et/ou repliée.

8. Wagon de chargement (40) selon l'une quelconque des revendications précédentes 1-7, **caractérisé en ce que** le wagon de chargement (40) est muni d'un ou plusieurs éléments (51) qui sont appropriés pour limiter le mouvement ou l'oscillation des marchandises chargées (42).

9. Wagon de chargement (40) selon l'une quelconque des revendications précédentes 1-8, **caractérisé en ce que** le wagon de chargement (40) est pourvu d'une ou plusieurs poches souples (60), dans lequel lesdites poches sont constituées d'un matériau de toile souple.

10. Procédé d'immobilisation d'une série de wagons de chargement (40) selon l'une quelconque des revendications 1-9, chacun d'entre eux étant approprié pour stocker une ou plusieurs marchandises (42), **caractérisé en ce que** ledit procédé comprend les étapes suivantes :
- charger des marchandises (42) dans des wagons de chargement ;
- suspendre les wagons de chargement (40) à partir d'un système de suspension (9, 10) dans un moyen de transport (1) ;
- raccorder les wagons de chargement (40) les uns aux autres dans le moyen de transport (1) ;
- verrouiller ensemble les wagons de chargement (40) dans le moyen de transport (1).

11. Procédé selon la revendication précédente 10, **caractérisé en ce que** les wagons de chargement (40) sont immobilisés en déplaçant une ou deux parois latérales du moyen de transport (1), et **en ce que** l'immobilisation s'effectue au niveau d'une ou deux parois latérales du moyen de transport (1).

12. Procédé selon la revendication précédente 11, **caractérisé en ce que** la ou les deux parois latérales sont déplacées de manière pivotable et/ou coulissante.

13. Procédé de libération d'une série de wagons de chargement selon l'une quelconque des revendications 1-10, chacun d'entre eux étant approprié pour stocker une ou plusieurs marchandises (42), lesquels wagons de chargement (40) sont suspendus à partir d'un système de suspension (9, 10) dans un moyen de transport, **caractérisé en ce que** ledit procédé comprend les étapes suivantes :
- déverrouiller ensemble les wagons de chargement (40) dans le moyen de transport (1).
- retirer les wagons de chargement (40) du moyen de transport (1) ;
- retirer les wagons de chargement (40) du système de suspension (9, 10) dans le moyen de transport (1) ;
- décharger des marchandises (42) des wagons de chargement (40).

14. Moyen de transport (1) pourvu d'un ou plusieurs systèmes de suspension (9, 10) auxquels des wagons de chargement (40) selon l'une quelconque des revendications précédentes 1-9 sont suspendus.
